Europäisches Patentamt

(19) European Patent Office

Office européen des brevets

(11) Veröffentlichungsnummer: **0 024 598**
**B1**

(12) **EUROPÄISCHE PATENTSCHRIFT**

(45) Veröffentlichungstag der Patentschrift:
**22.12.82**

(21) Anmeldenummer: **80104676.4**

(22) Anmeldetag: **08.08.80**

(51) Int. Cl.³: **G 01 F 11/38**

(54) Vorrichtung zum genauen Dosieren von Fluiden schwankender Viskosität.

(30) Priorität: **10.08.79 DE 2932558**

(43) Veröffentlichungstag der Anmeldung:
**11.03.81 Patentblatt 81/10**

(45) Bekanntmachung des Hinweises auf die Patenterteilung:
**22.12.82 Patentblatt 82/51**

(84) Benannte Vertragsstaaten:
**BE CH FR GB IT LI LU NL SE**

(56) Entgegenhaltungen:
**US-A-2 646 189**
**US-A-3 486 664**

(73) Patentinhaber: **DAGMA Deutsche Automaten- und Getränkemaschinen GmbH & Co. KG, Schillerstrasse 22, D-2067 Reinfeld/H. (DE)**

(72) Erfinder: **Kückens, Alexander, Harvestehuder Weg 28, D-2000 Hamburg 13 (DE)**

(74) Vertreter: **Döring, Rudolf, Dr. et al, Joseph-Spital-Strasse 7, D-8000 München 2 (DE)**

«Vorrichtung zum genauen Dosieren von Fluiden schwankender Viskosität»

Die Erfindung betrifft eine Vorrichtung zum genauen Dosieren von Fluiden schwankender Viskosität, insbesondere stark viskosen Flüssigkeiten, wie Sirupen mit hohem Zuckergehalt, mit einem an einen Vorratsbehälter anschliessbaren, im wesentlichen vertikal angeordneten Ventilkanal, in dem zum Schliessen bzw. zum Freilegen eines Ventilauslasses ein magnetisch gegen die Schwerkraft anhebbarer Verschlussteil angeordnet ist und den eine die Magnetkraft erzeugende elektromagnetische Vorrichtung umgibt sowie mit einem Förderelement für das Fluid. Eine solche Vorrichtung ist aus US-A-2 646 189 bekannt.

Es sind Massnahmen bekannt, mit deren Hilfe die Ausflussmenge eines Fluids der Zeit nach bestimmt werden kann. Hierbei wird dafür gesorgt, dass der die Ausflussmenge bestimmende statische Druck von dem jeweiligen Flüssigkeitsspiegel, z.B. in einem Vorratsbehälter, unabhängig konstant gehalten wird (vgl. US-PS-3 258 166). Hierbei besteht der Nachteil, dass diese Massnahmen nur dann voll wirksam sind, wenn das Fluid unabhängig von der Zeit und unabhängig von der Aussentemperatur stets die gleiche Viskosität und Fliessfähigkeit beibehält. Wenn dagegen bei Konstanthaltung der Abgabezeit und Konstanthaltung des für die Ausflussmenge massgeblichen Druckes die Viskosität sich z.B. durch Temperatureinflüsse ändert, ändert sich auch die in der gleichen Zeit abgegebene Fluidmenge. Eine genaue Dosierung ist daher nur dann möglich, wenn nach diesem Prinzip arbeitende Vorrichtung mit einer Einrichtung zur Ausschaltung von Temperaturänderungen oder Viskositätsänderungen vorgesehen ist.

Es ist daher bekannt, bei stark viskosen Flüssigkeiten, z.B. bei Sirupen mit hohem Zuckergehalt, die Dosierung volumenmässig vorzunehmen. Hierbei kann die Dosierung unabhängig von der Viskosität und ihren Änderungen nahezu konstant gehalten werden. Dieses System hat jedoch den Nachteil, dass keine Fliessend-Einstellung möglich ist und dass die volumetrische Dosierung sich in Abhängigkeit von der Aussentemperatur insoweit verändert, als die Austrittsgeschwindigkeit des Fluids aus der volumetrischen Dosierkammer nie konstant bleibt. Hinzu kommt, dass bei starken Veränderungen der Viskosität die Randhaftung des Fluids in der volumetrischen Messkammer in starkem Umfange schwankt. Dadurch können wiederum Ungenauigkeiten in der Dosierung auftreten. Dies gilt insbesondere dann, wenn generell die der Randhaftung unterliegende Oberfläche im Vergleich zu der jeweiligen zu dosierenden Menge gross ist. Auch lassen sich hier nicht die Schwierigkeiten vollständig eliminieren, die bei Änderung der Viskosität infolge von starken Änderungen der Umgebungstemperatur auftreten.

Es ist Aufgabe der Erfindung, hier Abhilfe zu schaffen und eine einfache und von den genannten Nachteilen freie Vorrichtung zum genauen Dosieren von Fluids schwankender Viskosität zu schaffen, die sich besonders zum genauen Dosieren kleiner Mengen, insbesondere von stark viskosen Flüssigkeiten, eignet. Besonders geeignet ist die Vorrichtung zum Dosieren von Sirupen mit hohem Zuckergehalt.

Diese Aufgabe wird erfindungsgemäss durch die Merkmale des Anspruchs 1 gelöst. Weiterbildungen der Erfindung sind Gegenstand der abhängigen Ansprüche. Der Antrieb des Rotors, ebenso wie das Anheben des Verschlussteiles, lassen sich dabei vorteilhafterweise durch ein und dasselbe Magnetfeld erreichen. Dabei ist die Anordnung besonders einfach und zuverlässig, wenn der Ferritkern selber durch das Magnetfeld sowohl anhebbar als auch in Drehrichtung antreibbar ist und bewegungsmässig sowohl mit dem Verschlussteil als auch mit dem Rotor verbunden ist. Der Rotor braucht dabei an den axialen Bewegungen des Ferritkerns nicht teilzunehmen, während der eigentliche Verschlusteil nicht an der Rotationsbewegung des Ferritkerns beteiligt zu werden braucht. Bevorzugt bilden jedoch das förderwirksame Element und der Verschlusteil eine Bewegungseinheit, die gemeinsam mit dem Ferritkern sowohl die axiale Bewegung als auch die Drehbewegung ausführt. Dabei wird das Gewicht der gesamten axial bewegbaren Einheit als Schliesseruck für das Verschlusselement ausgenutzt, um den Auslass des Ventilkanals hermetisch abzusperren.

Die heb- und/oder rotierend antreibbare Einheit ist zweckmässigerweise innerhalb des Ventilkanals auf einer gestellfesten Achse zentriert.

Wird die Feldspule der elektromagnetischen Vorrichtung eingeschaltet, baut sich ein rotierendes Magnetfeld auf. Der Ferritkern, der in seiner Ruhestellung, die mit der Schliessstellung des Verschlusteiles zusammenfällt, sich unterhalb der Ebene der günstigsten Magnetfeldwirkung befindet, wird durch das sich aufbauende Magnetfeld in die optimale Stellung angehoben und in Drehrichtung angetrieben, wobei die Drehzahl periodenabhängig gesteuert wird. Je nachdem mit wieviel Polen der Rotor ausgebildet ist, ergibt sich ein grösseres oder kleineres Antriebsdrehmoment. Eine vier- oder sechspolige Ausbildung hat sich als zufriedenstellend erwiesen.

Das Anheben des Verschlusselementes erfolgt nur über wenige Millimeter die ausreichend sind, den Auslass aus dem Ventilkanal hinreichend weit freizugeben. Die Drehzahl des Rotors richtet sich nach der Ausbildung der Rotorflügel und der gewünschten Förderwirkung. So kann z.B. eine Drehzahl von 1500 U/min vorgesehen sein. Das Anfangsdrehmoment des auf diese Weise gebildeten Motors wird ausreichend kräftig gewählt, um die Anlaufphase sehr klein zu halten, so dass der Rotor trotz hoher Viskosität des Fluids nahezu über die ganze Einschaltzeit mit konstanter Drehzahl läuft. Der Spalt zwischen dem Rotor und der Innenfläche des Ventilkanals braucht nicht übermässig eng gehalten zu werden, da bei höherer Viskosität die Durchflussmenge durch den Umfangsspalt vernachlässigt werden kann. Hinzu kommt, dass die relative Drehbewegung zwischen den sich gegenüberliegenden Flächen eine axiale Druckströmung des Spaltes behindert.

Die Vorrichtung kann kombiniert werden mit Massnahmen, wie sie aus der eingangs genannten US-PS-3 258 166 bekannt sind, um den auf das Fluid in der Ventileinrichtung wirksamen statischen Druck konstant zu halten.

Besonders vorteilhaft ist es, wenn der Ferritkern als Hohlzylinder ausgebildet ist, so dass das vom Rotor geförderte Fluid durch das Innere des Ferritkerns abfliesst.

Da die gesinterten Ferritkerne mit keramischen Körpern bezüglich hoher chemischer Beständigkeit gleichgesetzt werden können, ist bei Einsatz aller in Frage kommenden Fluids in der Regel mit hinreichender Korrosionsfestigkeit zu rechnen. In Ausnahmefällen kann der Ferritkern oder der Rotor allseitig mit einem gegenüber dem Fluid indifferenten Material ummantelt sein.

Die Erfindung wird nachfolgend anhand einer schematischen Zeichnung näher erläutert:

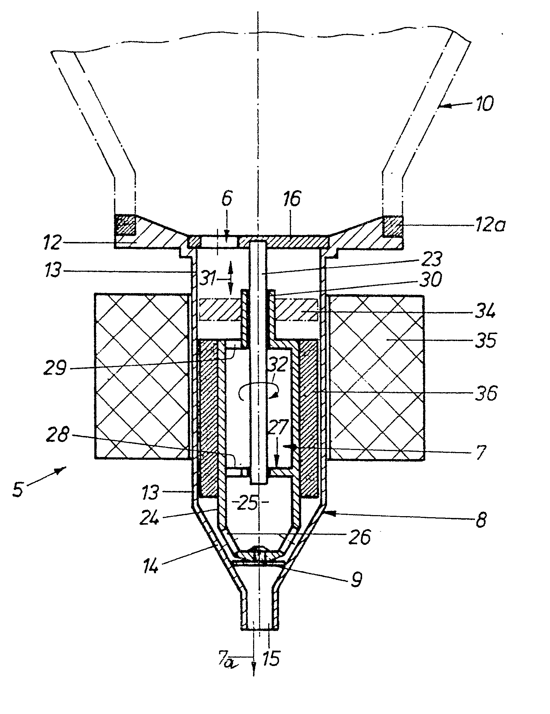

Die Zeichnung zeigt eine Vorrichtung gemäss der Erfindung im senkrechten Schnitt.

Die Dosiervorrichtung 5 ist an einen geeigneten Behälter, z.B. Transport- und Vorratsbehälter 10, mittels eines Flansches oder Deckels 12 unter Zwischenschaltung einer Dichtung 12a anschliessbar. Das im Inneren des Behälters 10 befindliche Fluid kann in der gezeigten Überkopfstellung des Behälters 10 durch eine Eintrittsöffnung 6 in die Dosiervorrichtung 5 einfliessen und tritt aus dieser am unteren Ende entsprechend dem Pfeil 7 aus.

Die Dosiervorrichtung weist ein Ventilgehäuse 8 auf, in dem ein Verschlusselement 7 in axialer Richtung entsprechend dem Doppelpfeil 31 auf und ab bewegbar ist. Das Verschlusselement 7 weist an seinem unteren Ende ein Verschlussglied 9 auf, das mit der Innenfläche des unteren sich kegelstumpfförmig verjüngenden Endes 14 des Ventilgehäuses 8 in der abgesenkten Stellung des Verschlussgliedes 7 abdichtend zusammenwirkt. Das Verschlussglied 9 kann aus einem gesonderten elastischen Körper, z.B. einer elastischen Scheibe, bestehen, die sich unter dem Gewicht des Verschlusselementes 7 in der Schliessstellung unter gleichzeitiger Verformung abdichtend gegen die Innenfläche des Abschnittes 14 legt. Unterhalb des Verschlussgliedes 9 ist eine stutzenförmige Auslauföffnung 15 der Dosiervorrichtung vorgesehen.

Das Ventilgehäuse 8 ist im dargestellten Beispiel mit seinem oberen Ende einstückig mit dem scheibenförmigen Anschlussflansch 12 der Dosiervorrichtung verbunden. Das Gehäuse weist einen hohlzylindrischen Abschnitt 13 auf, der einen zylindrischen Ventilkanal 25 begrenzt, in dem das Verschlussglied 7 angeordnet ist. In den Anschlussflansch 12 ist ein Armstern oder eine Scheibe 16 eingesetzt, welche die Eintrittsöffnung oder Eintrittsöffnungen 6 für das Fluid aufweist und die das obere Ende einer gestellfesten Achse 13 unterstützt, die frei nach unten und konzentrisch zu dem zylindrischen Abschnitt 13 des Ventilgehäuses 8 ragt. Auf dieser gestellfesten Achse 23 ist das Verschlussglied 7 geführt. Im dargestellten Beispiel besteht das Verschlussglied aus einem hohlzylindrischen Tragkörper 24, dessen unteres Ende sich kegelstumpfförmig verjüngt und Auslauföffnungen 26 sowie eine Stirnwand aufweist, in der das Verschlussglied 9 befestigt ist. An das obere Ende schliesst sich unter Freilassung einer oder mehrerer Einlauföffnungen 29 ein buchsenförmiger Abschnitt 30 an, der auf der Achse 23 gleitet. Zur weiteren Führung dient eine zentrale Bohrung in einer Zwischenwand 27, welche ihrerseits wieder eine oder mehrere Durchlauföffnungen 28 aufweist.

Der Durchmesser des Teils 24 ist merklich kleiner als die lichte Weite des Ventilkanals 13. In dem Ringraum zwischen den beiden Teilen ist ein hülsenförmiger Ferritkern 36 angeordnet, der fest auf der Aussenseite des Teils 24 befestigt ist und gegenüber der Ventilkanalwandung 13 einen geringen Ringspalt freilässt, der eine freie Bewegung des Verschlusselementes 7 sowohl in axialer Richtung als auch in Drehrichtung entsprechend dem Pfeil 32 um die Achse 23 ermöglicht, ohne dass durch diesen Spalt eine nennenswerte Menge des stark viskosen Fluids hindurchtreten kann.

In der Figur ist der Ferritkern 36 in einer gegenüber der magnetischen Ebene einer elektromagnetischen Wicklung 35 abgesenkten Stellung, in der das Verschlusselement 7 mit dem Verschlussglied 9 die Auslauföffnung 15 der Dosiervorrichtung abdichtet. Der Ferritkern ist durch entsprechende Polbildung in Form eines Rotors ausgebildet, der zusammen mit der Wicklung 35 einen Elektromotor bildet, dessen Drehzahl periodenabhängig ist. Bei Einschalten der Wicklung 35 baut sich ein Drehfeld auf, dessen maximale Kraft in einer horizontalen Ebene etwa auf halber Höhe der Wicklung 35 liegt. Aufgrund dieses Magnetfeldes wird der Ferritkern 36 aus seiner abgesenkten Stellung in der Figur in eine Fluchtungsstellung zur Wicklung 35 angehoben, so dass das Verschlussglied 9 die Auslauföffnung 15 freigibt. Gleichzeitig erfasst das Drehfeld der Wicklung 35 den Ferritkern und beschleunigt diesen bei entsprechender Auslegung des Systems nahezu ohne ins Gewicht fallender Anlaufphase auf eine vorbestimmte Drehzahl, die während der Einschaltdauer der Wicklung 35 praktisch konstant ist.

Der Ferritkern 36 bzw. der Teil 24 ist über die Buchse 30 drehmässig mit einem oberhalb des Ferritkerns angeordneten Förderelement 34 verbunden. Die Anordnung kann so getroffen sein, dass das Förderelement 34 axial unverschiebbar gelagert ist und zwischen dem Förderelement und dem Ferritkern lediglich eine drehfeste Verbindung besteht. Bevorzugt ist jedoch das Förderelement 34 fest mit dem Ferritkern bzw. dem Teil 24 des Verschlusselementes verbunden. Ferritkern, Teil 24 und Förderelement 34 bilden somit eine Bewegungseinheit, die sowohl in axialer Richtung entsprechend dem Pfeil 31 als auch in Drehrichtung entsprechend dem Pfeil 32 bewegt werden kann. Das Förderelement 34 kann in Form eines Förderschneckenabschnittes, in Form eines Förderflügels, in Form einer Förderschaufel oder dgl. ausgebildet sein. So kann das Förderelement ein ein- oder mehrflügliger Drehpropeller sein.

Wenn es auch möglich ist, den Ferritkern 36 lediglich für den Drehantrieb einzusetzen, wird jedoch die in der Zeichnung dargestellte Ausführung bevorzugt, in der über den Ferritkern auch das Verschlusselement 7 aus der Schliessstellung angehoben wird, so dass ein und dieselbe Wicklung 35 sowohl für das Öffnen und Schliessen des Ventilkanals als auch für die Zwangsförderung des Fluids durch den geöffneten Ventilkanal massgeblich ist. Aufgrund der Ausbildung des Förderelementes und der Drehzahl wird in Abhängigkeit von der Viskosität zuverlässig die gewünschte Menge des Fluids während der Öffnungszeit des Ventilkanals durch diesen entsprechend dem Pfeil 7a abgemessen und herausgefördert. Die Anordnung arbeitet zuverlässig und genau, unabhängig von Temperatur und Viskoseänderungen und ohne Beeinträchtigung durch die eingangs im Zusammenhang mit dem Stand der Technik behandelten Faktoren. Die Mengenregelung ist durch Formgebung des Förderelementes und Drehzahl des Rotors leicht einstellbar, wobei das Förderelement 34 leicht auswechselbar mit dem Ferritkern bzw. dem Verschlussteil verbunden sein kann.

Es ist auch möglich, das Innere des Teils 24 mit Förderelementen auszurüsten, die zusätzlich oder anstelle des Förderelementes 34 im Inneren des von dem Fluid durchflossenen Ferritkernes förderwirksam sind.

**Patentansprüche**

1. Vorrichtung zum genauen Dosieren von Fluiden schwankender Viskosität, insbesondere stark viskosen Flüssigkeiten, wie Sirupen mit hohem Zuckergehalt, mit einem an einen Vorratsbehälter anschliessbaren, im wesentlichen vertikal angeordneten Ventilkanal (25), in dem zum Schliessen bzw. zum Freilegen eines Ventilauslasses (15) ein magnetisch gegen die Schwerkraft anhebbarer Verschlussteil (7, 9) angeordnet ist und den eine die Magnetkraft erzeugende elektromagnetische Vorrichtung (35) umgibt, sowie mit einem Förderelement (34) für das Fluid, dadurch gekennzeichnet, dass in dem Ventilkanal (25) ein Rotor (24, 36) vorgesehen ist, der einen Ferritkern (36) aufweist, welcher durch das Magnetfeld mit vorbestimmter Drehzahl angetrieben wird, wobei der Rotor mit dem Ventilkanal angeordneten Förderelement (34), wie z.B. einer Förderschnecke, einem Förderflügel oder einer Förderschaufel, antriebsmässig verbunden ist.

2. Vorrichtung nach Anspruch 1, dadurch gekennzeichnet, dass das Förderelement (34) drehmässig mit dem Verschlussteil (7, 9) fest verbunden ist.

3. Vorrichtung nach Anspruch 1 oder 2, dadurch gekennzeichnet, dass der Verschlussteil (7, 9) so mit dem Ferritkern (36) gekoppelt ist, dass er mit Hilfe der elektromagnetischen Vorrichtung (35) sowohl axial anhebbar als auch in Drehrichtung antreibbar ist.

4. Vorrichtung nach Anspruch 3, dadurch gekennzeichnet, dass der Verschlussteil vom Rotor (7, 9, 24, 36) gebildet ist.

5. Vorrichtung nach einem der Ansprüche 1 bis 4, dadurch gekennzeichnet, dass das Förderelement (34) als ein- oder mehrflügliger Drehpropeller ausgebildet ist, der berührungsfrei praktisch die lichte Weite des Ventilkanals (25) einnimmt.

6. Vorrichtung nach Anspruch 4 oder 5, dadurch gekennzeichnet, dass der Ferritkern (36) des Rotors ringförmig oder hohlzylindrisch ausgebildet ist und eine Durchflussöffnung (28, 29) umgibt.

7. Vorrichtung nach einem der Ansprüche 4 bis 6, dadurch gekennzeichnet, dass der Ferritkern (36) allseitig mit einem gegenüber dem Fluid indifferenten Material ummantelt ist.

**Revendications**

1. Dispositif pour le dosage précis de fluides à viscosité changeante, en particulier de liquides de viscosité importante, tels que sirops à haute teneur en sucre, dispositif comportant un canal avec soupape (25), essentiellement vertical, pouvant être raccordé à un réservoir d'approvisionnement, dans lequel, pour fermer ou libérer une traversée de soupape (15), est disposé un organe obturateur de soupape (7, 9) pouvant être soulevé par action magnétique contre la force de gravité, et qui entoure un dispositif électro-magnétique (35) produisant la force magnétique, un élément de transport (34) étant prévu pour le fluide, dispositif caractérisé en ce que, dans le canal à soupape (25) est prévu un rotor (24, 36) qui présente un noyau de ferrite (36) et qui est entraîné, avec une vitesse de rotation prédéterminée, par le champ magnétique, ce rotor étant relié, pour son entraînement, avec l'élément de transport (34) disposé dans le canal à soupape, tel que, par exemple, une vis sans fin, une ailette de transport, ou une aube de transport.

2. Dispositif suivant la revendication 1, caractérisé en ce que l'élément de transport (34) est relié rigidement, avec entraînement en rotation, avec l'organe obturateur de soupape (7, 9).

3. Dispositif suivant l'une des revendications 1 ou 2, caractérisé en ce que l'organe obturateur de soupape (7, 9) est accouplé avec le noayau de ferrite (36) de telle manière qu'il puisse être soulevé axialement à l'aide du dispositif électromagnétique (35) ainsi qu'entraîné en rotation.

4. Dispositif suivant la revendication 3, caractérisé en ce que l'organe obturateur de soupape est constitué par le rotor (7, 9, 24, 36).

5. Dispositif suivant l'une quelconque des revendications 1 à 4, caractérisé en ce que l'élément de transport (34) est constitué comme un propulseur rotatif à une ou plusieurs ailettes, qui occupe, pratiquement sans frottement, la section transversale libre du canal de soupape (25).

6. Dispositif suivant l'une des revendications 4 ou 5, caractérisé en ce que le noyau de ferrite (36) du rotor a une forme annulaire ou de cylindre creux et il entoure une ouverture de traversée (28, 29).

7. Dispositif suivant l'une quelconque des revendications 4 à 6, caractérisé en ce que le noyau de ferrite (36) est revêtu sur tous ses côtés avec un matériau indifférent par rapport au fluide.

**Claims**

1. A device for accurately metering fluids of varying viscosity, in particular intensely viscous fluids, such as syrups with a high sugar content, having a valve port (25), which may be connected to a storage container, disposed essentially vertically, a closing part (7, 9), which may be magnetically raised against the force of gravity, disposed in the valve port for closing and releasing a valve outlet (15), the closing part (7, 9) being surrounded by an electromagnetic device (35) which generates the magnetic force, and a conveyer element (34) for the fluid, characterized in that a rotor (24, 36) ist provided in the valve port (25) and comprises a ferrite core (36) which is driven by the magnetic field at a predetermined number of revolutions, the rotor being connected for drive to the conveyer element (34) such as, for example, a screw conveyer, a conveyer vane or conveyer blade, disposed in the valve port.

2. The device according to claim 1, characterized in that the conveyer element (34) ist rigidly connected for rotation to the closing part (7, 9).

3. The device according to claim 1 or claim 2, characterized in that the closing part (7, 9) is coupled with the ferrite core (36) such that it may be both axially raised and driven in the direction of rotation by means of the electromagnetic device (35).

4. The device according to claim 3, characterized in that the closing part is formed by the rotor (7, 9, 24, 36).

5. The device according to any one of claims 1 to 4, characterized in that the conveyer element (34) is constructed as a single or multi-bladed rotary propeller which practically occupies the inside width of the valve port (25) without contact.

6. The device according to claim 4 or claim 5, characterized in that the ferrite core (36) of the rotor is constructed in an annular or hollow cylindrical manner and surrounds a through-flow opening (28, 29).

7. The device according to any one of claims 4 to 6, characterized in that the ferrite core (36) is surrounded on all sides by a material which is insensitive with respect to the fluid.

1/1